# EUROPEAN PATENT APPLICATION

(11) **EP 2 669 760 A1**
(43) Date of publication of application: **04.12.2013**
(21) Application number: 12823185.9
(22) Date of filing: 28.03.2012
(51) Int. Cl.: G06F 1/26, H01M 10/42, H02J 7/00

(54) **HETEROGENEOUS BATTERY CONNECTION DEVICE AND BATTERY SYSTEM USING SAME**

(71) Applicant: Hitachi, Ltd., Tokyo 100-8280 (JP)
(72) Inventor: MIURA, Masahiro, Hitachi-shi Ibaraki 3191292 (JP); HONDA, Mitsutoshi, Hitachi-shi Ibaraki 3191292 (JP)
(74) Representative: Beetz & Partner
(86) International application number: PCT/JP2012/002131
(87) International publication number: WO 2013/145000

(57) **Abstract**

A device for connecting batteries of different types for a battery pack system which enables easy connection of batteries of different types to an existing battery system can be provided.

A battery system according to the invention includes: a battery module having plural battery cells and a battery control unit which gathers battery information of the plural battery cells; and a control unit to which the battery information of the battery module is inputted. The battery system is characterized in that the battery module and the control unit are connected via a device for connecting batteries of different types, and that the device for connecting batteries of different types has a control information processing unit which converts the battery information based on a communication protocol of the battery control unit and a communication protocol of the control unit.

## Description

### Technical Field

The present invention relates to a device for connecting batteries of different types and a battery system using the same.

### Background Art

In a battery system, the system is constructed using battery modules in which plural batteries are connected in series or in parallel. With respect to such a system, there is a demand that when a battery module constituting the battery system has a failure, the battery system should be continued by replacing only that battery module instead of reconstructing the entire system.

Moreover, when a battery module is replaced, a battery module using a battery of a different type may be substituted in some cases because of user needs or the like. However, with the battery module having the different battery type, the communication protocol for transmitting and receiving control information corresponding to that battery varies depending on the specifications.

PTL 1 discloses a battery pack serial communication device in which the communication protocol for each type of battery is recognized by a data communication specifications recognition unit provided in the battery pack serial communication device and then a communication protocol transmitted from an application is converted to the communication protocol corresponding to each type of battery, thus enabling communication with batteries of different specifications.

### Related Art Document

### Patent Literature

PTL 1: JP-A-2002-42897

### Summary of the Invention

### Problems that the Invention Is to Solve

However, recently, there is an increasing demand for a large-scale battery system capable of charging and discharging a larger amount of electric power in order to store, in batteries (rechargeable batteries), a large amount of electric power generated by using renewable energy or the like, or store a large amount of electric power from a system in batteries. Therefore, in order to collect and control information of each battery in such a large-scale battery system, a control circuit corresponding to the scale of incorporated batteries needs to be provided and control with plural hierarchical structures is necessary.

This large-scale battery system has a problem that when a part of the battery modules is to be replaced, a dedicated circuit and dedicated software corresponding to the battery module to be replaced needs to be developed, unless the specifications and properties for communication of the upper controller as well as problems related to the communication protocol of the lower battery modules are taken into consideration.

In view of such backgrounds, an object of the invention is to provide a device for connecting batteries of different types and a battery system using the same in which even when a battery module or the like using a battery of a different type is substituted, the battery module can easily be connected to the existing battery system.

### Means for Solving the Problems

A battery system according to the invention includes: a battery module having plural battery cells and a battery control unit which collects battery information of the plural battery cells; and a control unit to which the battery information of the battery module is inputted. The battery system is characterized in that the battery module and the control unit are connected via a device for connecting batteries of different types, and that the device for connecting batteries of different types has a control information processing unit which converts the battery information based on a communication protocol of the battery control unit and a communication protocol of the control unit.

### Advantages of the Invention

According to the invention, a device for connecting batteries of different types and a battery system using the same in which even when a battery module or the like using a battery of a different type is substituted, the battery module can easily be connected to the existing battery system, can be provided.

### Brief Description of the Drawings

[FIG. 1] It is a block diagram showing an example of configuration of a battery module, including a device for connecting batteries of different types according to an embodiment of the invention.
[FIG. 2] It is a block diagram showing an example of configuration including a device for connecting batteries of different types according to an embodiment of the invention and a battery module without having a control circuit.
[FIG. 3] It is a view showing an example of configuration of a device for connecting batteries of different types according to an embodiment of the invention.
[FIG. 4] It is a view conceptually showing a battery module using laminated batteries and a battery module using cylindrical batteries.
[FIG. 5] It is a view showing a block diagram of a battery system according to an embodiment of the invention.
[FIG. 6] It is a view showing an example of configuration of a battery system according to an embodiment of the invention.
[FIG. 7] It is a view showing an example in which batteries of different types are connected, in a battery system according to an embodiment of the invention.
[FIG. 8] It is a view showing a power generation system according to an embodiment of the invention.
[FIG. 9] It is a view showing a control flow of a battery system according to an embodiment of the invention.
[FIG. 10] It is a view showing details of a control information processing unit according to an embodiment of the invention.

### Mode for Carrying out the Invention

Next, a form of embodying the invention (hereinafter referred to as "embodiment") will be described in detail with reference to the drawings when appropriate.

### <First Embodiment>

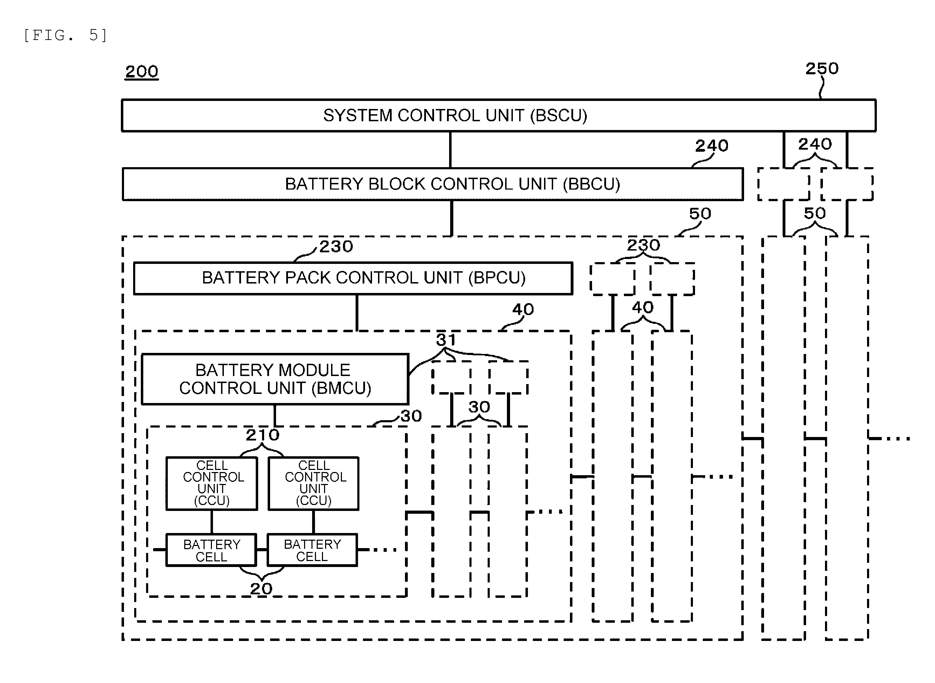

First, the configuration of a battery system of the invention is described using FIG. 5. A battery system 200 according to this embodiment includes: a battery module 30 having plural battery cells 20 and cell control units 210 which control the battery cells 20; a battery pack 40 having plural battery modules 30 and battery control units 31 which control the battery modules 30; a battery block 50 having plural battery packs 40 and battery pack control units 230 which control the battery packs; a battery block control unit 240 which controls the battery block 50; and a system control unit 250 which collects and manages information received from the battery block control unit 240.

This battery system 200 is treated in terms of configurations that are divided depending on battery capacity, such as the battery module 30, the battery pack 40 and the battery block 50. Therefore, replacement is carried out using each of the battery module 30, the battery pack 40 or the battery block 50 as a unit.

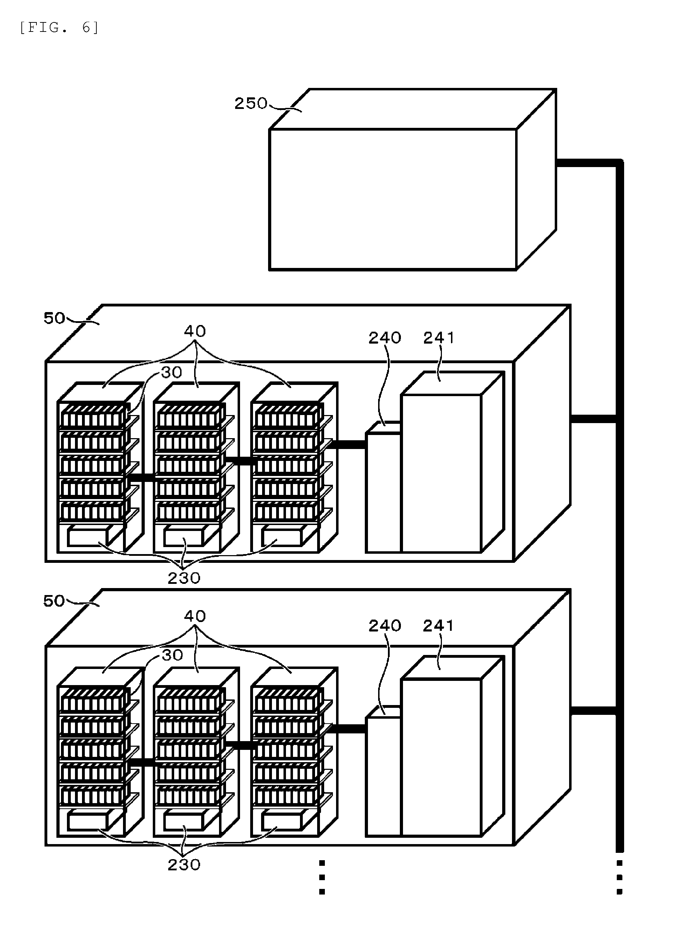

A more specific configuration is described using FIG. 6. As shown in FIG. 6, the battery modules 30, which are the smallest units, are arrayed and housed in the battery blocks 40. Also, the battery pack control units 230 are housed in the battery packs 40 similarly to the battery modules 30.

Each battery pack 40 is connected with the battery block control unit 240 via wiring or the like, as shown in FIG. 6. Also, though not shown in FIG. 6, a power lead-out line is laid from each battery pack 40 and the power lead-out line is connected to an inverter unit 241. After conversion to desired AC power, the power is outputted to an electric power system 320, as described later. Also, needless to say, in the configuration, when charging each battery cell 20 (not shown in FIG. 6), the generated AC power is converted to DC power and can charge each battery cell 20 via the power lead-out line. The battery block 50 has a configuration housing the battery packs 40, the battery block control unit 240 and the inverter unit 241 as described above.

In this embodiment, the battery control unit 31 is provided inside the battery module but may be separately prepared outside. The battery pack control unit 230 may similarly be provided separately outside the battery pack 40.

Also, more specifically, the battery modules 30 are housed in a rack, thus forming the battery pack 40. The battery packs 40 are housed in a container, thus forming the battery block 50.

Each of the battery block control units 240 provided inside the plural battery blocks 50 is connected to and controlled by the system control unit 250 via a communication line. By the way, while the battery block control units 240 and the system control unit 250 are connected via communication lines in this embodiment, these units may be configured to be connected wirelessly.

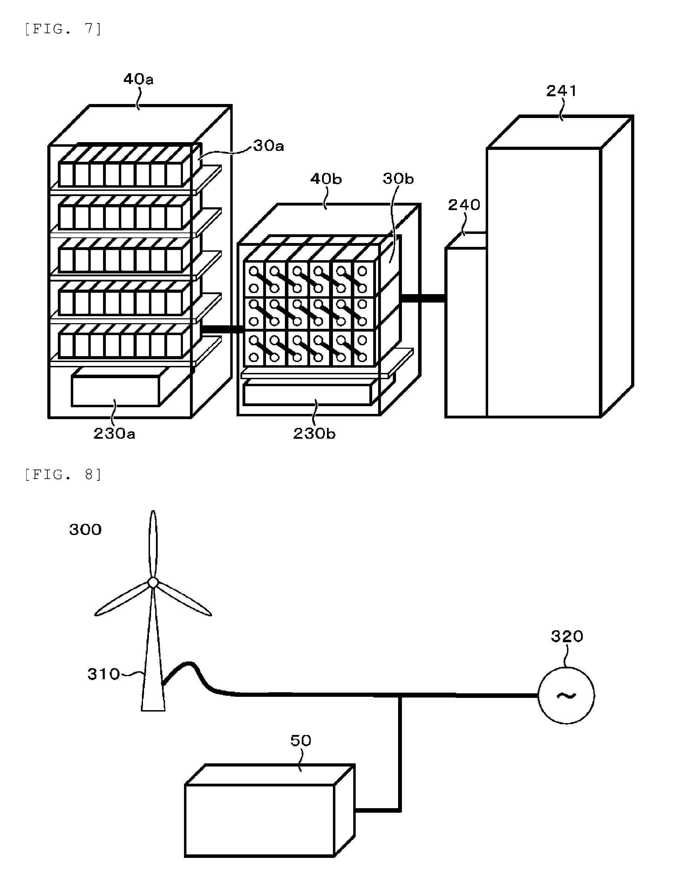

FIG. 8 shows the battery block 50 connected with a wind power generation system 300 as an example. The wind power generation system 300 has a configuration in which a wind power generation device 310, the battery block 50 and an electric power system 320 are connected with each other via a power line. When power generated by the wind power generation device 310 is in excess of a power value requested by the electric power system 320, the battery block 50 stores the excess power. Conversely, when power generated by the wind power generation device 310 is smaller than power requested by the electric power system 320, the battery block 50 is controlled to output charged power to the electric power system 320.

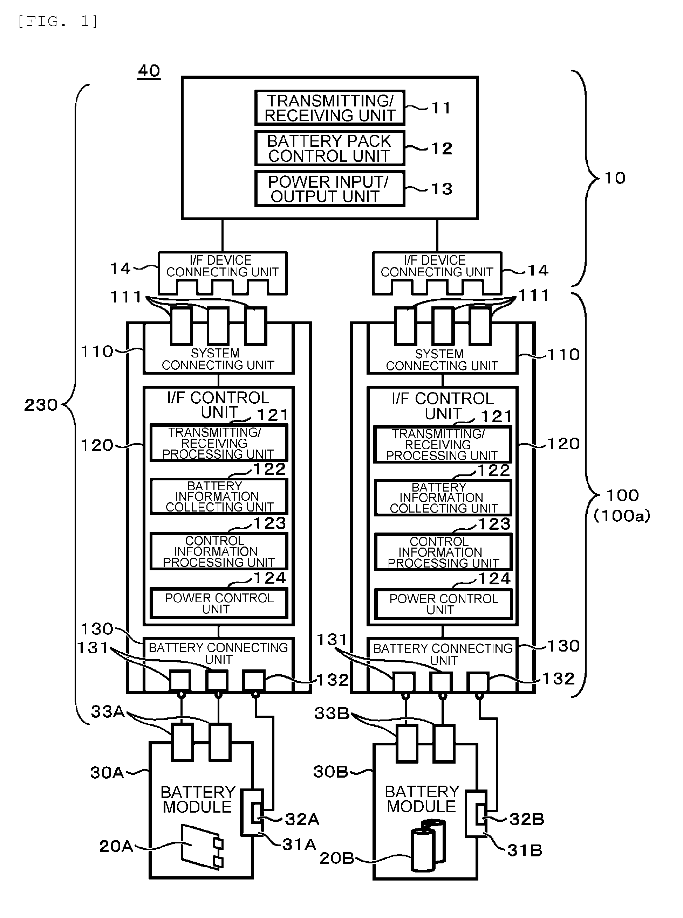

Next, the configuration in the case where different battery modules 30A and 30B are connected is described using FIG. 1. In this embodiment, an example using a battery module including laminated battery cells 20A as the battery module 30A and a battery module including cylindrical battery cells 20B as the battery module 30B is described.

The battery pack 40 includes the battery pack control unit 230 and the battery modules 30A, 30B, as described above. Moreover, the battery pack control unit 230 includes a controller unit 10 and a unit for connecting batteries of different types 100.

The controller unit 10 has a transmitting/receiving unit 11, a battery pack control unit 12, a power input/output unit 13, and an I/F device connecting unit 14. The battery pack control unit 12 outputs a signal to balance the battery module 30 and a signal to control voltage, current and state of charge (SOC) to the transmitting/receiving unit 11, based on information of the battery module 30 connected to a lower level and information from the battery block control unit 240 connected to a higher level.

The transmitting/receiving unit 11 outputs a control signal to the unit for connecting batteries of different types 100 via the I/F device connecting unit 14 and a connector 111 connected with the I/F device connecting unit 14. By the way, wiring to output the power outputted from the battery module 30 to the outside of the battery pack 40 is separately provided in the connector 111, and the power is outputted outside via the power input/output unit 13 of the controller unit 10.

Next, the configuration of the unit for connecting batteries of different types 100 is described. The unit for connecting batteries of different types 100 is a device which connects each of the battery modules 30 to the controller unit 10. One unit for connecting batteries of different types 100 is formed for each battery module 30. This unit for connecting batteries of different types 100 converts battery information (current, voltage, temperature) acquired from the battery module 30 to a communication protocol used in the controller unit 10 and transmits the information to the controller unit 10. Also, this unit for connecting batteries of different types 100 converts a control signal from the controller unit 10 to a communication protocol used in the battery control unit 31 of the battery module 30 to which the unit 100 itself is connected, and controls charging and discharging of the battery module 30.

The unit for connecting batteries of different types 100 roughly includes a system connecting unit 110, an I/F control unit 120, a battery connecting unit 130, and a storage unit 126 made up of storage means such as flash memory or RAM.

The system connecting unit 110 has a connector 111 which is connected to the I/F device connecting unit 14 provided in the controller unit 10. This connector 111 includes connectors corresponding to a positive electrode and a negative electrode for inputting and outputting power, and a connector for transmitting and receiving information such as battery information and control information. Then, via this system connecting unit 110, power is inputted and outputted, and also battery information and control information are transmitted to the controller unit 10.

The battery connecting unit 130 has battery connecting terminals 131 which are connected to a positive terminal and a negative terminal of the battery module 30 (30A, 30B) connected to the unit 130 itself, and a battery control connecting unit 132 connected to a battery information connecting unit 32 of the battery control unit 31.

The I/F control unit 120 is responsible for control of the entire unit for connecting batteries of different types 100 and has a transmitting/receiving processing unit 121, a battery information collecting unit 122, a control information processing unit 123, and a power control unit 124. The functions of this I/F control unit 120 are realized, for example, by a CPU expanding and executing a program stored in the storage unit 126 of the unit for connecting batteries of different types 100, into a memory such as RAM, or by providing a dedicated circuit or the like.

The battery information collecting unit 122 collects battery information transmitted from the battery control unit 31, for example, information of current, voltage and battery temperature. By the way, this battery information is information collected by using a current sensor, a voltage sensor and a temperature sensor (not shown) separately provided in the battery module 30. The collected battery information is transmitted to the control information processing unit 123. The battery information is converted to a communication protocol used in the controller unit 10 and is transmitted to the transmitting/receiving processing unit 121.

The control information processing unit 123 roughly has two functions. The first function is to calculate the state of charge (SOC) based on the above current information, voltage information and temperature information collected by the battery information collecting unit 122. The other function is to recognize the communication protocol of information transmitted from the battery control unit 31 and convert the current information, voltage information, temperature information and state of charge information from the communication protocol used on the side of the battery module 30 to the communication protocol used in the controller unit 10.

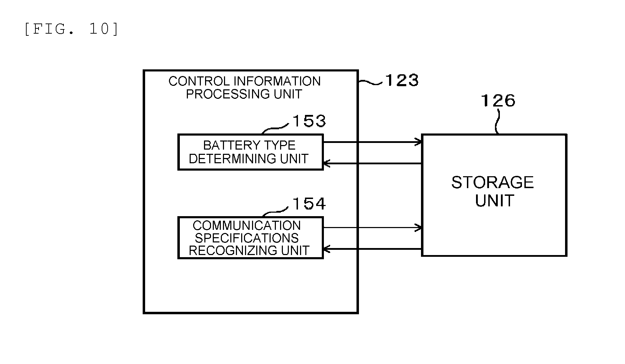

Specifically, as shown in FIG. 10, the leading communication information of the control signal data outputted from the controller unit 10 is recognized by a communication specifications recognizing unit 154 and stored in the storage unit 126 as information corresponding to a specific communication protocol. After that, the leading communication information of the battery information data outputted from the battery control unit 31 is recognized and similarly stored in the storage unit 126 as information corresponding to a specific communication protocol. Then, the control information processing unit 123 compares the two communication protocols stored in the storage unit 126, converts the current information, voltage information, temperature information and state of charge information to information that is usable to the controller unit 10 based on protocol conversion calculation and conversion map, and transmits the information to the transmitting/receiving processing unit 121.

Also, the control information processing unit 123 acquires the control information transmitted from the controller 10, via the transmitting/receiving processing unit 121. This control information is designated on the assumption of a specific battery capacity or a specific battery type (for example, Li ion battery in the case of a Li ion battery, or lead storage battery in the case of a lead storage battery).

This control information processing unit 123 also has a function of converting the control information assuming a specific battery capacity or a specific battery type to control information corresponding to the type and battery capacity of the battery module that is connected, based on the battery information collected by the battery information collecting unit 122. Specifically, the battery type is determined by a battery determining unit 153.

The power control unit 124 controls a switching element, not shown, based on the control information from the control information processing unit 123, and thereby performs control related to charging and discharging of the battery module 30.

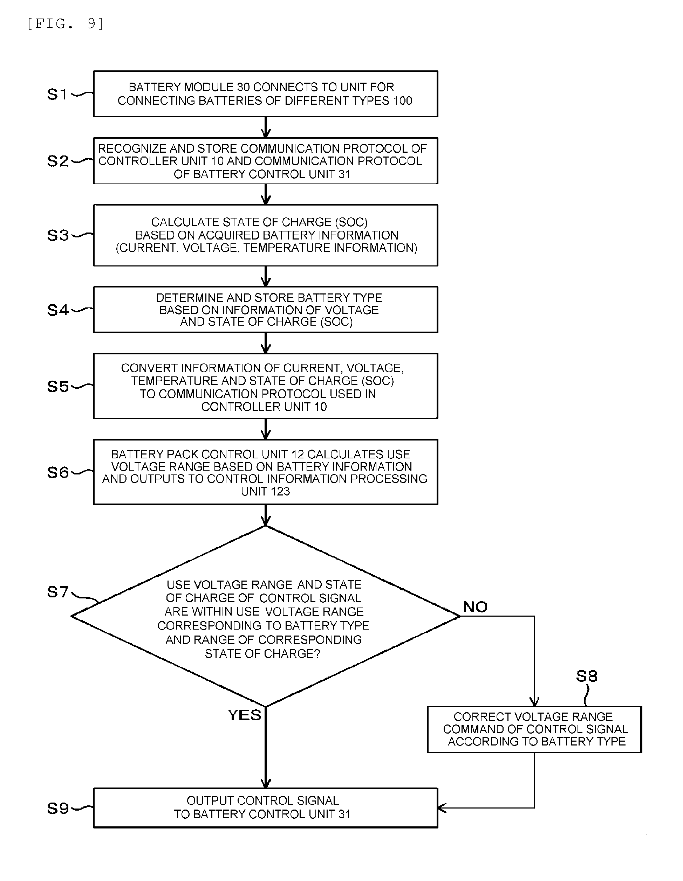

Next, a specific content of control is described using the flowchart of FIG. 9. First, in step S1, the battery module 30 is connected to the controller unit 10 via the unit for connecting batteries of different types 100.

Next, in step S2, the battery pack control unit 12 of the controller unit 10 and the control information processing unit 123 communicate with each other. The communication protocol used in the controller unit 10 is recognized and the communication protocol used in the controller unit 10 is saved in the storage unit 126. Also, at this time, the battery information of the battery module 30 and the communication protocol used in the battery control unit 31 are acquired and recognized by the battery information collecting unit 122, and the communication protocol used in the battery control unit 31 is also saved in the storage unit 126.

In step S3, the battery information (current value, voltage value, temperature value) is outputted from the battery information collecting unit 122 to the control information processing unit 123. The control information processing unit 123 calculates the state of charge (SOC) based on the battery information.

In step S4, the battery type is determined based on the relational information between voltage for each battery type and state of charge (SOC), stored in advance in the storage unit 126. The information of the battery type is stored in the storage unit 126.

In step S5, using the information of the communication protocol used in the controller unit 10 and the information of the communication protocol used in the battery control unit 31, stored in the storage unit 126, the control information processing unit 123 converts the current information, the voltage information, the state of charge information and the temperature information to a communication protocol that is usable to the controller unit 10, and outputs the information to the battery pack control unit 12 of the controller unit 10.

In step S6, the battery pack control unit 12 of the controller unit 10 decides a voltage range of each battery module 30, based on each battery information converted by the control information processing unit 123 corresponding to each battery module 30, and outputs the voltage range and the state of charge (SOC) within the voltage range, as a control signal, to each control information processing unit 123.

In step S7, the control information processing unit 123 determines whether the voltage range and the state of charge (SOC) of the outputted control signal fall within an available voltage range for the battery type of the battery module 30 and the range of state of charge (SOC) corresponding to the available voltage range. If these fall within the ranges, the battery type is determined to be the same as the battery type assumed by the controller unit 10, and in step S9, a control signal is outputted without any correction to the battery control unit 31.

Meanwhile, if the voltage range and the corresponding state of charge (SOC) of the control signal do not fall within the above ranges, the control information processing unit 123 in step S8 specifies the battery type assumed by the controller unit 10, based on the information of the control signal and the relation between voltage and state of charge (SOC) for each battery type stored in the storage unit 126. Then, the control information processing unit 123 converts the information of the control signal to a control signal corresponding to the voltage range of the battery module to which the unit for connecting batteries of different types 100 is connected, using the relational information of voltage and state of charge between battery type, stored in advance in the storage unit 126.

After that, the processing goes to step S9 and the corrected control signal is outputted to the battery control unit 31.

In this manner, this unit for connecting batteries of different types 100 can convert a control signal with the upper controller in accordance with the type of the battery to which the unit 100 itself is connected. Therefore, whatever type of battery is substituted, the battery can be controlled.

As described above, by using the device for connecting batteries of different types 100 according to the first embodiment of the invention, the battery modules 30A, 30B of different types can be incorporated and used in the existing battery system 200 without changing the hardware or software of the upper controller even when batteries of different types (for example, the laminated batteries 20A and the cylindrical batteries 20B) have to be used because of a change in the system.

Also, when the battery module 30 of a certain type is connected first to the unit for connecting batteries of different types 100 according to the first embodiment of the invention, the control information processing unit 123 may acquire information about a control method corresponding to the type of the battery module 30 from the storage unit 126 where that information is stored in advance.

Also, the control information processing unit 123 may have, inside the I/F control unit 120, a unit for determining batteries of different types (not shown) that determines which type of battery module 30 is connected. Information about a control method for the battery module 30 corresponding to each type of battery module 30 may be stored in advance in the storage unit 126. The unit for determining batteries of different types may determine the type of the battery module 30 based on the voltage and current information of the battery connecting terminal 131, and the information about the control method for the battery module 30 of the type that is determined may be acquired from the control unit.

By the way, batteries of different types may be not only the laminated battery 20A and the cylindrical battery but also a high-output Li ion battery 30a and a high-capacity lead storage battery 30b as shown in FIG. 7.

### <Second Embodiment>

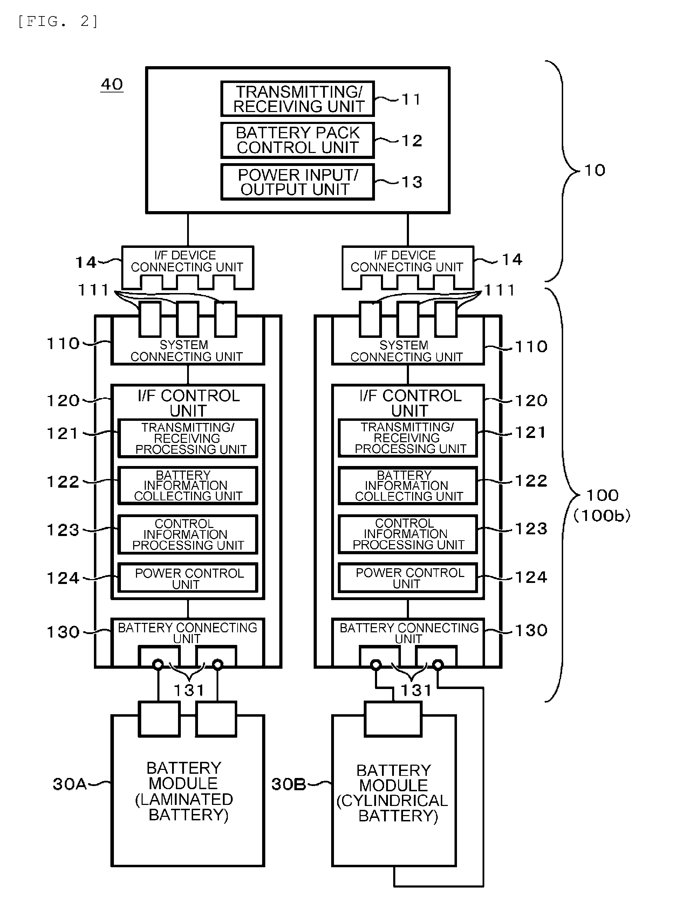

Next, unit for connecting batteries of different types 100 (100b) according to a second embodiment of the invention will be described using FIG. 2.

Configurations similar to the first embodiment are denoted by the same reference numerals. Particularly, a difference between the invention according to this embodiment and the invention according to the first embodiment is that the battery module 30 does not have the battery control unit 31 and the battery information connecting unit 32.

Also in FIG. 2, the battery modules 30 are described as the battery module 30A using plural laminated batteries and the plural-cylindrical battery module 30B, for convenience. However, a battery module including Li ion batteries and a battery module including lead storage batteries may also be used.

The unit for connecting batteries of different types 100 (100b) according to the second embodiment of the invention does not have a battery control connecting unit in the battery connecting unit 130. The battery information of the battery module 30 is acquired by the battery information collecting unit 122 collecting information from a current sensor, a voltage sensor and a temperature sensor (not shown) arranged in the battery connecting terminal 131.

The battery information collected by the battery information collecting unit 122 is temporarily stored in the storage unit 126 and then transmitted to the control information processing unit 123.

The processing after the transmission to the control information processing unit 123 is carried out by a method similar to the first embodiment.

By arranging the current sensor, the voltage sensor and the temperature sensor in the battery connecting terminal 131 as in the invention according to this embodiment, it is possible to cope with and control a battery module like the battery module 30 without having the battery control unit 31. Therefore, more diverse battery types can be used in the existing battery system 200 without changing the hardware and software of the upper controller.

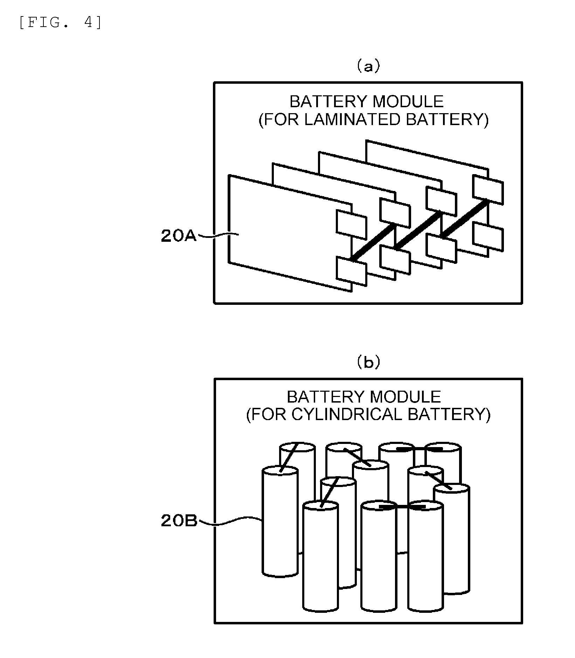

While the battery module 30 according to this embodiment includes the plural battery cells 20 as shown in FIG. 4, the invention according to this embodiment can be used in the case where there is only a single battery cell 20, as a matter of course.

### <Third Embodiment>

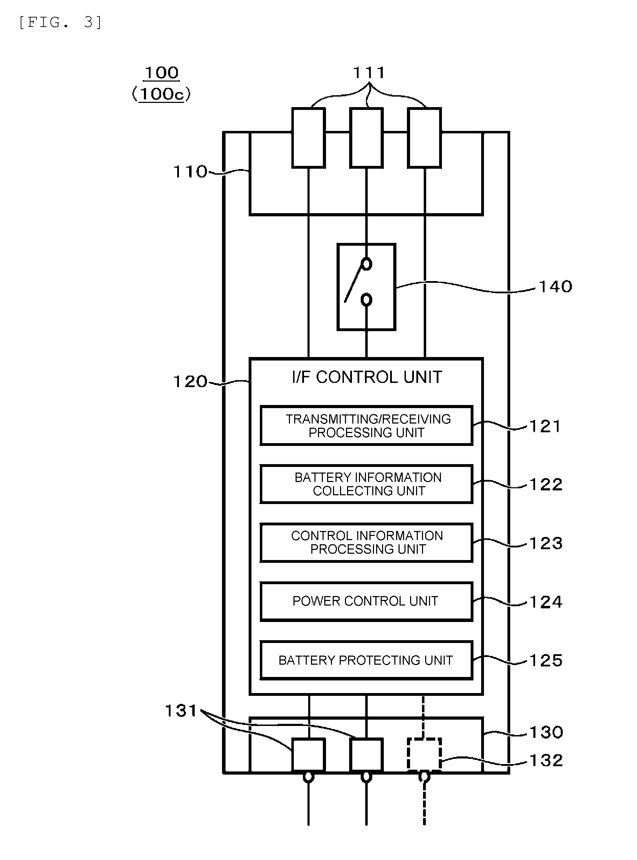

Next, the unit for connecting batteries of different types 100 (100c) according to a third embodiment of the invention will be described using FIG. 3. Configurations similar to the first embodiment or the second embodiment are denoted by the same reference numerals.

Particularly, a difference between the invention according to this embodiment and the invention according to the first embodiment or the second embodiment is that the unit for connecting batteries of different types 100 (100a, 100b) has a battery protection switch 140 and a battery protecting unit 125.

This battery protecting unit 125 is characterized by controlling ON/OFF of the battery protection switch 140 and thereby protecting the battery module 30 connected with the unit 125 from overcharging, overdischarging and overcurrent.

The battery protecting unit 125 in the I/F control unit 120 acquires battery information (current, voltage, state of charge (SOC)) from the control information processing unit 123. Then, the battery protecting unit 125 determines whether the battery module 30 connected to the own unit for connecting batteries of different types 100 (100c) is in an overcharged state exceeding a predetermined threshold (first threshold) or an overdischarged state below a predetermined threshold (second threshold) or not, based on the state of charge (SOC) of the battery information. Also, the battery protecting unit 125 determines whether the battery module 30 connected with the own unit for connecting batteries of different types 100 (100c) is in an overcurrent state exceeding a predetermined threshold (third threshold) or not, based on the current value of the battery information. Then, if it is determined that at least one of overcharging, overdischarging and overcurrent applies, the battery protecting unit 125 turns off the battery protection switch 140 and thus suspends the charge and discharge of the battery module 30.

Also, when the control information processing unit 123 generates battery information including temperature information together with current, voltage and state of charge (SOC), the battery protection unit 125 determines whether the battery module 30 connected to the own unit for connecting batteries of different types 100 (100c) exceeds a predetermined temperature (for example, in the case of a lithium ion battery, the use limit temperature of this lithium ion battery (for example, 60°C), and in the case of a lead storage battery, the use limit temperature of this lead storage battery (for example, 50°C)) or not. Then, if the predetermined temperature is exceeded, the battery protecting unit 125 may turn off the battery protection switch 140 and thus suspend the charging and discharging.

In this way, the battery module 30 and the upper controller can be cut off using the battery protecting unit 125 and the battery protection switch 140, based on the information converted by the device for connecting batteries of different types. Whatever type of battery is used, the existing battery system 200 can be protected without changing the hardware or software of the upper controller.

### Description of Reference Numerals and Signs

- 1: battery pack system
- 10: controller unit
- 11: transmitting/receiving unit
- 12: battery pack control unit
- 13: power input/output unit
- 20: battery cell
- 30: battery module
- 31: battery control unit
- 32: battery information connecting unit
- 100: unit for connecting batteries of different types
- 110: system connecting unit
- 111: connector
- 120: I/F control unit
- 121: transmitting/receiving processing unit
- 122: battery information collecting unit
- 123: control information processing unit
- 124: power control unit
- 125: battery protecting unit
- 130: battery connecting unit
- 131: battery connecting terminal
- 132: battery control connecting unit
- 140: battery protection switch

The above embodiments of the invention as well as the appended claims and figures show multiple characterizing features of the invention in specific combinations. The skilled person will easily be able to consider further combinations or sub-combinations of these features in order to adapt the invention as defined in the claims to his specific needs.

## Claims

1. A battery system comprising:
a battery module having plural battery cells and a battery control unit which collects battery information of the plural battery cells; and
a control unit to which the battery information of the battery module is inputted,
the battery system **characterized in that** the battery module and the control unit are connected via a device for connecting batteries of different types, and
the device for connecting batteries of different types has a control information processing unit which converts the battery information based on a communication protocol of the battery control unit and a communication protocol of the control unit.

2. The battery system according to claim 1, **characterized in that**
the device for connecting batteries of different types further includes a storage unit, and
the storage unit stores in advance a relation of voltage and state of charge of a battery corresponding to the communication protocol of the battery control unit.

3. The battery system according to claim 1, or 2, **characterized in that**
the device for connecting batteries of different types further includes a connector and a power connecting unit connected with the battery module, and
a switch element is provided between the connector and the power connecting unit.

4. The battery system according to one of claims 1 to 3, **characterized in that**
the battery information is current information, voltage information and temperature information of the battery module.

5. The battery system according to one of claims 1 to 4, **characterized in that**
the device for connecting batteries of different types includes a battery protecting unit, and
the battery protecting unit controls opening and closing of the switching element based on the temperature information of the battery module.

6. A control method for a battery system including:
a battery module having plural battery cells and a battery control unit which gathers battery information of the plural battery cells;
a control unit to which the battery information of the battery module is inputted; and
a device for connecting batteries of different types which connects the battery module and the control unit,
the control method **characterized in that** the device for connecting batteries of different types has a first process of storing a communication protocol of the battery control unit and a communication protocol of the control unit, and a second process of correcting control information from the control unit according to the communication protocol of the battery module.

7. The control method for the battery system according to claim 6, **characterized in that**
the correction in the second process is carried out using battery information stored in advance in the device for connecting batteries of different types.
